# EUROPEAN PATENT APPLICATION

(11) **EP 4 815 595 A1**
(43) Date of publication of application: **30.09.2026**
(21) Application number: 24922783.6
(22) Date of filing: 06.02.2024
(51) Int. Cl.: H04W 72/0457

(54) **UPLINK TRANSMISSION METHOD, APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); LIN, Yanan, Dongguan, Guangdong 523860 (CN)
(74) Representative: Penza, Giancarlo
(86) International application number: PCT/CN2024/076325
(87) International publication number: WO 2025/166539

(57) **Abstract**

The present application relates to the field of cellular communications, and discloses an uplink transmission method, an apparatus, a device, and a storage medium. The method is executed by a terminal device. The method comprises: on the basis of a transmission parameter, sending an uplink channel or an uplink signal, wherein the transmission parameter is determined on the basis of a related parameter of a first frequency domain bandwidth, wherein the first frequency domain bandwidth is a subset of a second frequency domain bandwidth, and the second frequency domain bandwidth is an uplink BWP.

## Description

### TECHNICAL FIELD

The present disclosure relates to the field of cellular communication, in particular to a method for uplink transmission, an apparatus, a device and a storage medium.

### BACKGROUND

The uplink transmission is used for a terminal device to send an uplink channel or an uplink signal to a network device. During uplink transmission, the terminal device needs to determine multiple transmission parameters. For example, the position of the time-frequency resource, the frequency domain starting position of the frequency hopping, the frequency hopping offset, and the like.

Due to the continuous design and optimization of duplex mode in New Radio (NR) system, how to perform uplink transmission for the newly designed duplex mode is an urgent technical problem to be solved.

### SUMMARY

The present disclosure provides a method for uplink transmission, an apparatus, a device and a storage medium, and the technical solution at least includes the following operations.

According to an aspect of an embodiment of the present disclosure, there is provided a method for uplink transmission, the method is applied to a terminal device and includes the following operation.

An uplink channel or an uplink signal is sent based on a transmission parameter, the transmission parameter is determined based on a relevant parameter of a first frequency domain bandwidth.

The first frequency domain bandwidth is a subset of a second frequency domain bandwidth, and the second frequency domain bandwidth is an uplink BandWidth Part (BWP) of the terminal device.

According to another aspect of the embodiments of the present disclosure, there is provided a method for uplink transmission, the method is applied to a network device and includes the following operation.

An uplink channel or an uplink signal is received based on a transmission parameter, the transmission parameter is determined based on a relevant parameter of a first frequency domain bandwidth,

The first frequency domain bandwidth is a subset of a second frequency domain bandwidth, and the second frequency domain bandwidth is an uplink BWP of the terminal device.

According to an aspect of an embodiment of the present disclosure, there is provided a frequency hopping transmission apparatus, the apparatus includes: a sending module, configured to send an uplink channel or an uplink signal based on a transmission parameter, the transmission parameter is determined based on a relevant parameter of a first frequency domain bandwidth.

The first frequency domain bandwidth is a subset of a second frequency domain bandwidth, and the second frequency domain bandwidth is an uplink BWP of the terminal device.

According to another aspect of an embodiment of the present disclosure, there is provided a frequency hopping transmission apparatus, the apparatus includes: a receiving module, configured to receive an uplink channel or an uplink signal based on a transmission parameter, the transmission parameter is determined based on a relevant parameter of a first frequency domain bandwidth.

The first frequency domain bandwidth is a subset of a second frequency domain bandwidth, and the second frequency domain bandwidth is an uplink BWP of the terminal device.

According to an aspect of an embodiment of the present disclosure, there is provided a terminal device including: a transmitter and/or a backscatter transmitter. The terminal device is configured to implement the method for uplink transmission as described above.

According to another aspect of an embodiment of the present disclosure, there is provided a network device including: a processor; a receiver and/or transmitter coupled to the processor; a memory for storing executable instructions of the processor. The network device is configured to implement the method for uplink transmission as described above.

According to an aspect of the present disclosure, there is provided a computer-readable storage medium in which executable instructions are stored, and the executable instructions are loaded and executed by a processor to implement the method for uplink transmission as described in the above aspects.

According to an aspect of the present disclosure, there is provided a computer program product including computer instructions stored in a computer-readable storage medium, a processor of a computer device reading the computer instructions from the computer-readable storage medium, and the processor executing the computer instructions, causing the computer device to implement the method for uplink transmission as described in the above aspects.

According to an aspect of the present disclosure, there is provided a chip including programmable logic circuit and/or program instructions for implementing the method for uplink transmission as described in the above aspects when the chip is in operation.

According to an aspect of the present disclosure, there is provided a computer program including computer instructions executed by a processor of a computer device to cause the computer device to perform the method for uplink transmission as described in the above aspects.

The technical solutions provided by the embodiments of the present disclosure may include the following beneficial effects.

By determining the transmission parameter of the uplink transmission based on the relevant parameter of the first frequency domain bandwidth, where the first frequency domain bandwidth is a subset of the second frequency domain bandwidth. Compared with the mode of using only the second frequency domain bandwidth to determine the transmission parameter in the related art, the present disclosure can adapt to the influence of the new duplex mode on the actual available uplink bandwidth of the terminal device, and can accurately determine the transmission parameter even if the actual available uplink bandwidth of the terminal device is smaller than the second frequency domain bandwidth.

### BRIEF DESCRIPTION OF THE DRAWINGS

In order to illustrate the technical solutions in the embodiments of the disclosure more clearly, the following will briefly introduce the drawings used in the description of the embodiments. Apparently, the drawings in the following description are only some embodiments of the disclosure. For the skilled person in the art, other drawings may be obtained from these drawings without creative work.
FIG. 1 illustrates a schematic diagram of a cellular communication system according to an exemplary embodiment of the present disclosure.
FIG. 2 illustrates a time-frequency schematic diagram of BWP switching according to an exemplary embodiment of the present disclosure.
FIG. 3 illustrates a time-frequency schematic diagram of SubBand non-overlapping Full Duplex (SBFD) according to an exemplary embodiment of the present disclosure.
FIG. 4 illustrates a time-frequency schematic diagram having both SBFD and non-SBFD according to an exemplary embodiment of the present disclosure.
FIG. 5 illustrates a schematic diagram of a random access procedure according to an exemplary embodiment of the present disclosure.
FIG. 6 illustrates an incorrect schematic diagram of frequency hopping transmission according to an exemplary embodiment of the present disclosure.
FIG. 7 illustrates a schematic diagram of a method for uplink transmission according to an exemplary embodiment of the present disclosure.
FIG. 8 illustrates a time-frequency schematic diagram of a first frequency domain bandwidth according to an exemplary embodiment of the present disclosure.
FIG. 9 illustrates a time-frequency schematic diagram of a first frequency domain bandwidth according to an exemplary embodiment of the present disclosure.
FIG. 10 illustrates a time-frequency schematic diagram of a first frequency domain bandwidth according to an exemplary embodiment of the present disclosure.
FIG. 11 illustrates a time-frequency schematic diagram of a first frequency domain bandwidth according to an exemplary embodiment of the present disclosure.
FIG. 12 illustrates a schematic diagram of frequency hopping parameters according to an exemplary embodiment of the present disclosure.
FIG. 13 illustrates a schematic diagram of a bit meaning of a Frequency Domain Resource Assignment (FDRA) field according to an exemplary embodiment of the present disclosure.
FIG. 14 illustrates a schematic diagram of a processing mode of an FDRA field according to an exemplary embodiment of the present disclosure.
FIG. 15 illustrates a schematic diagram of a processing mode of an FDRA field according to an exemplary embodiment of the present disclosure.
FIG. 16 illustrates a schematic diagram of an offset value parameter of a Physical Uplink Control Channel (PUCCH) resource set according to an exemplary embodiment of the present disclosure.
FIG. 17 illustrates a schematic diagram of intra-slot frequency hopping according to an exemplary embodiment of the present disclosure.
FIG. 18 illustrates a schematic diagram of inter-slot frequency hopping according to an exemplary embodiment of the present disclosure.
FIG. 19 illustrates a schematic structural diagram of an apparatus for uplink transmission according to an exemplary embodiment of the present disclosure.
FIG. 20 illustrates a schematic structural diagram of an apparatus for uplink transmission according to an exemplary embodiment of the present disclosure.
FIG. 21 illustrates a schematic structural diagram of a network device according to an exemplary embodiment of the present disclosure.
FIG. 22 illustrates a schematic structural diagram of a terminal device according to an exemplary embodiment of the present disclosure.

### DETAILED DESCRIPTION

In order to make the objectives, technical solutions and advantages of the disclosure more clearly, the embodiments of the disclosure will be described in further detail below in conjunction with the drawings. Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terminology used herein is for the purpose of describing particular embodiments only and is not intended to limit the present disclosure. As used in the present disclosure and the appended claims, the singular forms of "an", "the", and "said" are also intended to include the plurality forms unless the context clearly indicates otherwise. It should also be understood that the term "and/or" as used herein refers to and encompasses any or all possible combinations of one or more associated listed items.

It is to be understood that although the terms first, second, third, and the like may be used in the present disclosure to describe various information, such information should not be limited to such terms. These terms are used only to distinguish information of the same type from each other. For example, the first information may also be referred to as the second information without departing from the scope of the present disclosure, and similarly, the second information may also be referred to as the first information. Depending on the context, the word "if" as used herein may be interpreted as "upon" or "when" or "in response to determining".

In the embodiments of the present disclosure, "agreement" may be realized by storing corresponding codes, tables, or other modes that can be used to indicate relevant information in a communication device (for example, a terminal device or a network device) in advance, and the present disclosure does not limit the specific implementation method thereof. An agreement in communication protocols may also be understood as predefined in the communication protocols.

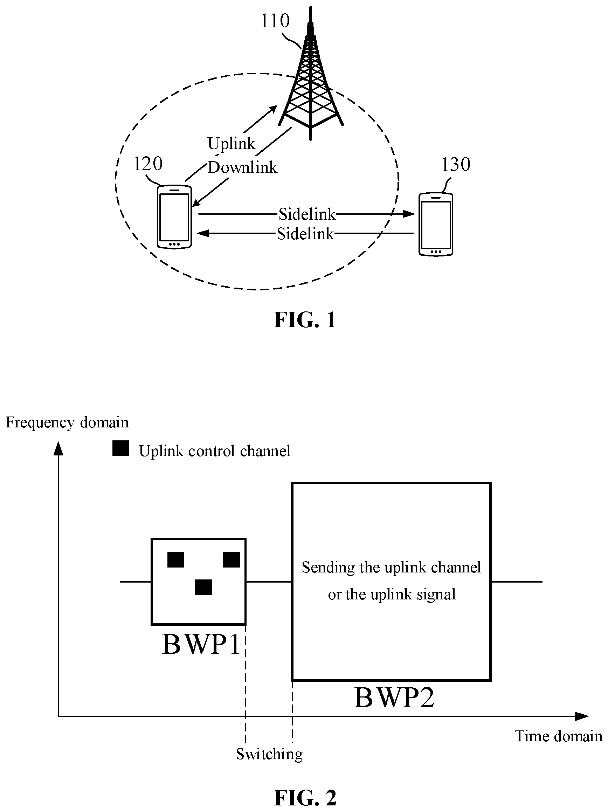

FIG. 1 illustrates a schematic diagram of a cellular communication system according to an exemplary embodiment of the present disclosure. The cellular communication system includes a network device 110 and a terminal device 120. Optionally, the terminal device 130 may also be included, which is not limited in the present disclosure.

The network device 110 in the present disclosure provides a wireless communication function, and the network device 110 includes, but is not limited to, an Evolved Node B (eNB), a Radio Network Controller (RNC), a Node B (NB), a Base Station Controller (BSC), a Base Transceiver Station (BTS), a home base station (e.g., a Home Evolved Node B, or a Home Node B (HNB)), A Baseband Unit (BBU), an Access Point (AP), a wireless relay node, a wireless backhaul node, a Transmission Point (TP) or a Transmission and Reception Point (TRP) in a Wireless Fidelity (Wi-Fi) system, or the like. It may also be a Next Generation Node B (gNB) or a Transmission Point (TRP or TP) in a 5th Generation (5G) mobile communication system, or one or a group of antenna panels (including a plurality of antenna panels) of a base station in a 5G system, or a network node constituting a gNB or a transmission point, such as a Baseband Unit (BBU) or a Distributed Unit (DU), or the like, or a base station in a Beyond Fifth Generation (B5G) mobile communication system or a 6th Generation (6G) mobile communication system, or a Core Network (CN), a Fronthaul, a Backhaul, a Radio Access Network (RAN), a network slice, or the like, or a reader/writer in a Radio Frequency Identification (RFID) system.

The terminal device 120 and/or the terminal device 130 in the present disclosure are also referred to as User Equipment (UE), an access terminal, a user unit, a user station, a mobile station, a mobile site, a remote station, a remote terminal, a mobile device, a user terminal, a terminal, a wireless communication device, a user agent, or a user apparatus, etc. The terminal includes, but is not limited to, a handheld device, a wearable device, an in-vehicle device, an Internet of Things (IoT) device, and the like, such as an electronic tag, a controller, a mobile phone, a tablet, an e-book reader, a laptop computer, a desktop computer, a television, a game console, a Mobile Internet Device (MID), an Augmented Reality (AR) terminal, a Virtual Reality (VR) terminal, and a Mixed Reality (MR) terminal, a wearable device, a handle, a wireless terminal in Industrial Control, a wireless terminal in Self Driving, a wireless terminal in Remote Medical, a wireless terminal in a Smart Grid, a wireless terminal in Transportation Safety, a wireless terminal in a Smart City, a wireless terminal in a Smart Home, a wireless terminal in Remote Medical Surgery, a cellular phone, a cordless phone, a Session Initiation Protocol (SIP) phone, a Wireless Local Loop (WLL) station, a Personal Digital Assistant (PDA), a Set Top Box (STB), a Customer Premise Equipment (CPE), etc.

The technical solution provided by the embodiment of the present disclosure can be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD) system, an Advanced Long Term Evolution (LTE-A) system, a Universal Mobile Telecommunication System (UMTS), a Worldwide Interoperability for Microwave Access (WiMAX) communication system, a 5G mobile communication system, a New Radio (NR) system, an evolution system of the NR system, an LTE-based access to unlicensed spectrum (LTE-U) system, an NR-based access to unlicensed spectrum (NR-U) system, a Terrestrial Networks (TN) system, an Non-Terrestrial Networks (NTN) system, Wireless Local Area Networks (WLAN), Wireless Fidelity (Wi-Fi), a cellular IoT system, a cellular passive IoT system, and can also be applied to subsequent evolution systems of the 5G NR system, and can also be applied to B5G, 6G and subsequent evolution systems. In some embodiments of the present disclosure, "NR" may also be referred to as a 5G NR system or a 5G system. Here, the 5G mobile communication system may include a Non-Standalone (NSA) and/or a Standalone (SA).

The technical solution provided by the embodiment of the present disclosure can also be applied to Machine Type Communication (MTC), Long Term Evolution-Machine (LTE-M), a Device to Device (D2D) network, a Machine to Machine (M2M) network, an Internet of Things (IoT) network, or other networks. The IoT network may include, for example, an Internet of Vehicles. Here, the communication modes in the Internet of Vehicles system are collectively referred to as Vehicle to X (V2X, X may represent anything), and for example, the V2X may include Vehicle to Vehicle (V2V) communication, Vehicle to Infrastructure (V2I) communication, Vehicle to Pedestrian (V2P) communication, Vehicle to Network (V2N) communication, and the like.

The terminal device 120 and the terminal device 130 communicate with each other through some kind of direct communication interface, such as a PC5 interface. For example, the terminal device 120 and the terminal device 130 are both within the network coverage area and located in the same cell, or the terminal device 120 and the terminal device 130 are both within the network coverage area but located in different cells, or the terminal device 120 is within the network coverage area but the terminal device 130 is outside the network coverage area.

The network device 110 and the terminal device 120 communicate with each other through some air interface technology, such as a Uu interface. There are two communication scenarios between the network device 110 and the terminal device 120: Uplink (UL) transmission and Downlink (DL) transmission. Here, the uplink transmission means that the terminal device 120 sends a signal (at least one of an uplink channel, an uplink signaling, uplink data, or an uplink signal) to the network device 110. The downlink transmission means that the network device 110 sends a signal (at least one of an uplink channel, an uplink signaling, uplink data, and an uplink signal) to the terminal device 120.

### BandWidth Part (BWP):

BWP is an access bandwidth that is smaller than both the cell system bandwidth and the terminal bandwidth capability. The terminal device can operate under a smaller BWP when there is no data transmission; when there is data transfer, it can operate under a larger BWP. Optionally, at the same time, the terminal device activates one downlink BWP and one uplink BWP within the same carrier.

As illustrated in FIG. 2, in a relatively idle period, the active uplink BWP of the terminal device is BWP1, the frequency domain width of the BWP1 is narrow, and the terminal device operating on BWP1 is relatively power-saving. When the terminal device needs to send an uplink channel or an uplink signal, the active uplink BWP can be switched from the BWP1 to the BWP2, and the BWP2 has a wide frequency domain width and can send an uplink channel or an uplink signal at a high rate.

In some embodiments, the "active uplink BWP" may be simply referred to as the active BWP or uplink BWP.

### SubBand non-overlapping Full Duplex (SBFD):

In order to overcome the problems of weak Uplink coverage, large Uplink delay and insufficient Uplink capacity caused by less Uplink (UL) resource allocation in Time Division Duplexing (TDD) technology, SBFD technology has been proposed. SBFD technology refers to a technology in which data can be sent and received simultaneously on different subbands of the same subframe, the same slot or the same symbol. SBFD technology is mainly used on the network device side, and the terminal device (i.e., User Equipment (UE)) side still maintains the current state, that is, only sends data or only receives data within the same subframe/slot/symbol. The SBFD technology may also be referred to as a Cross Division Duplex (XDD) technology.

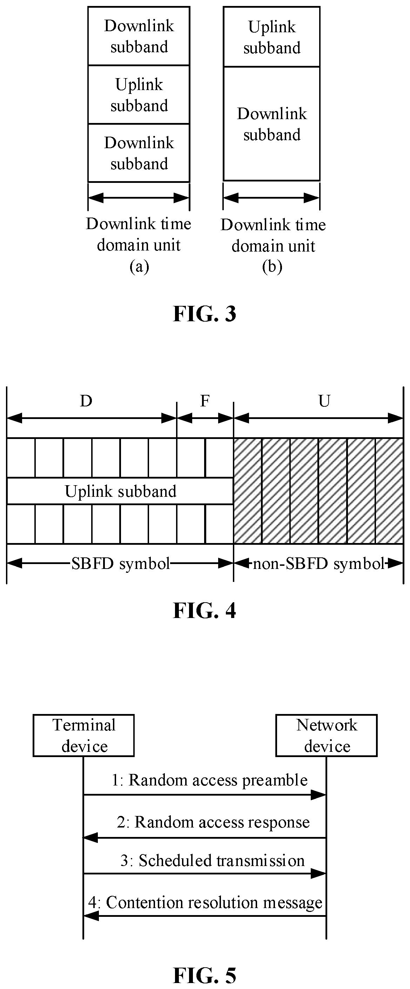

Exemplarily, as shown in FIG. 3, the SBFD technology configures a part of the frequency domain resource corresponding to a Downlink (DL) time domain unit as an uplink subband. As shown in part (a) of FIG. 3, the middle subband of the frequency domain resource corresponding to a downlink time domain unit is configured as an uplink subband, or as shown in part (b) of FIG. 3, the upper subband of the frequency domain resource corresponding to a downlink time domain unit is configured as an uplink subband.

In general, the SBFD operation meets the following points:
- The SBFD operates within a TDD carrier.
- The SBFD scheme is designed within a single uplink and downlink BWP pair with aligned center frequencies.
- Within a TDD carrier, there is at most one uplink subband on an SBFD symbol (including legacy uplink symbols). This one uplink subband may be located in the middle of the TDD carrier, or may be located on both sides of the TDD carrier.

Furthermore, in order to be compatible with symbol-level TDD uplink and downlink configurations, one slot is allowed to include SBFD symbols and non-SBFD symbols. FIG. 3 shows a schematic diagram of a slot provided by the related art. A part of the frequency domain resource corresponding to the downlink symbol (D) and the flexible symbol (F) of one slot shown in FIG. 4 is configured as an uplink subband.

Since frequent switching between SBFD symbols and non-SBFD symbols may increase implementation complexity and transmission interruption, in order to avoid frequent SBFD symbol switching, it is specified that a TDD cycle contains at most two transition points, one of which is from a non-SBFD symbol to an SBFD symbol and the other is from an SBFD symbol to a non-SBFD symbol. For example, one transition point is between the 8th symbol and the 9th symbol in FIG. 2. The transition point may be at the slot boundary or within one slot.

According to the related art, uplink transmission can only be limited to an uplink subband, and downlink reception can only be limited to a downlink subband.

### Introduction to the contention-based random access procedure:

The terminal device supports a contention-based random access procedure. FIG. 5 shows a schematic diagram of a contention-based random access procedure provided by the related art, the procedure includes the following operations.

**Operation 1:** the terminal device sends a message 1 (msg1): a random access preamble to the network device.

The terminal device sends the selected random access preamble on the time-frequency resource of the selected Physical Random Access Channel (PRACH), and the network device can estimate the uplink delay and the grant size required for the terminal device to transport the message 3 based on the random access preamble.

**Operation 2:** the network device sends a message 2 (msg2): a Random Access Response (RAR) to the terminal device.

After sending message 1 (msg1), the terminal device opens a Random Access Response window (RAR window) in which the Physical Downlink Control CHannel (PDCCH) is monitored. The PDCCH is a DCI scrambled by a Random Access Radio Network Temporary Identifier (RA-RNTI).

After the DCI scrambled by RA-RNTI is successfully detected, the terminal device can obtain a Physical Downlink Share CHannel (PDSCH) scheduled by the DCI, and the PDSCH includes the RAR.

The RAR includes: a Backoff Indicator (BI) for indicating a backoff time of the retransmission message 1; a Random Access Preamble IDentifier (RAPID) for indicating a random access preamble; a Time Advance Group (TAG) for adjusting uplink timing; an uplink grant, which is an uplink resource indication for scheduling message 3; and a Temporary Cell-Radio Network Temporary Identity (Temporary C-RNTI) for scrambling the PDCCH for message 4 (initial access).

**Operation 3:** the terminal device sends a message 3 (msg3): Scheduled Transmission (ST) to the network device.

Message 3 is mainly used to notify the network device of an event that triggers the random access procedure. For example, if the event is an initial access random procedure, the terminal device IDentification (ID) and the establishment cause are carried in the message 3. If the event is a Radio Resource Control (RRC) reestablishment, the connected state terminal device ID and the establishment cause are carried. Meanwhile, the terminal device ID or connected state terminal device ID carried in message 3 may cause the contention conflicts to be resolved at operation 240.

**Operation 4:** the network device sends a message 4 (msg4): a contention resolution message to the terminal device.

The message 4 has two functions. First, the message 4 may be used to resolve contention conflicts. Second, the message 4 is a message in which the network device sends the RRC configuration to the terminal device.

Here, resolving contention conflicts means that the terminal device receives the PDSCH for the message 4, and performs scheduling by matching the Common Control CHannel Signal Distribution Unit (CCCH SDU) in the PDSCH. There are two scheduling modes.
1. The terminal device carries the temporary C-RNTI in the message 3, and the message 4 is scheduled using the PDCCH scrambled by the temporary C-RNTI.
2. The terminal device does not carry the temporary C-RNTI in the message 3. For example, if the random access procedure is the initial access, the message 4 is scheduled using the PDCCH scrambled by the temporary C-RNTI.

### PUSCH (Msg3) scheduling based on RAR uplink grant (UL grant):

As shown in FIG. 4, the terminal device listens for the DCI scrambled by the RA-RNTI in the random access response window. This DCI is used to schedule the RAR, which includes the uplink grant. The contents of this uplink grant are shown in Table 1 below and are used to schedule the transmission of the message 3.

**Table 1**

| RAR uplink grant field | Number of bits |
|---|---|
| Frequency hopping flag | 1 |
| PUSCH frequency domain resource allocation | 14 |
| PUSCH time domain resource allocation | 4 |
| MCS | 4 |
| TPC command for PUSCH | 3 |
| CSI request | 1 |

As can be seen from Table 1, the RAR uplink grant field includes a 1-bit frequency hopping flag for indicating whether message 3 uses frequency hopping transmission. The transmission parameter of the message 3 is determined by the uplink BWP of the terminal.

### Message 4 and HARQ-ACK feedback:

After the terminal device receives the message 3, the network device needs to send a Msg 4 to indicate the terminal device that wins the contention. Subsequently, the terminal device that wins the contention performs HARQ-ACK feedback for message 4 on the PUCCH (not shown in FIG. 5).

The message 4 is also transported using frequency hopping transmission. The transmission parameter of the message 4 is determined by the uplink BWP of the terminal.

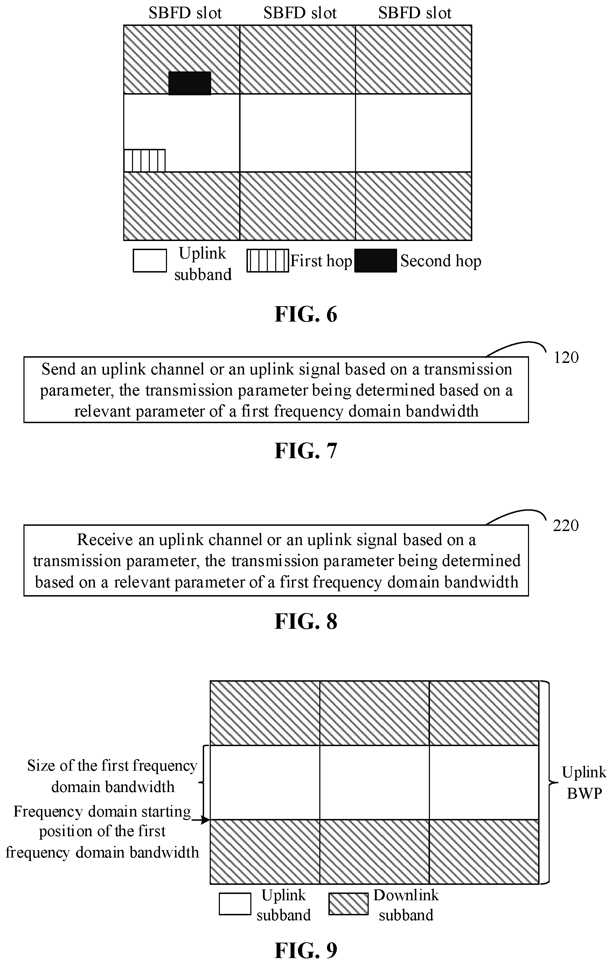

After the introduction of the SBFD slot, the frequency hopping transmission of the above-mentioned message 3 and message 4 may be problematic. As shown in FIG. 6, for the first hop and the second hop in the frequency hopping transmission, the frequency domain resources of the first hop and/or the second hop may be located outside the uplink subband because the transmission parameter mode in the related art does not take into account the SBFD slot. As can be seen from the example of FIG. 5, since the frequency domain resource of the second hop falls into the downlink subband, the second hop cannot be sent.

FIG. 7 illustrates a flowchart of a method for uplink transmission according to an exemplary embodiment of the present disclosure. The method is performed by a terminal device, and the method includes the following operations.

**Operation 120:** an uplink channel or an uplink signal is sent based on a transmission parameter, the transmission parameter is determined based on a relevant parameter of a first frequency domain bandwidth.

Here, the first frequency domain bandwidth is a subset of the second frequency domain bandwidth. Here, the second frequency domain bandwidth is an uplink bandwidth configured by the network device for the terminal device, and the first frequency domain bandwidth is an actual available uplink bandwidth determined in the second frequency domain bandwidth based on the configuration of the first duplex mode or the first time domain resource type. Exemplarily, the second frequency domain bandwidth is an uplink BWP of the terminal device. Exemplarily, the first duplex mode or the first time domain resource type is SBFD. In some embodiments, the first frequency domain bandwidth is a proper subset of the second frequency domain bandwidth, that is, the first frequency domain bandwidth belongs to the second frequency domain bandwidth and is smaller than the second frequency domain bandwidth.

In some embodiments, the uplink BWP is an uplink BWP that is activated for uplink transmission of the terminal device. The first frequency domain bandwidth is all or part of the bandwidth of the uplink BWP. Since the available uplink subbands differ depending on the configuration of different first time domain resource types or different time domain resource types, the first frequency domain bandwidth may change dynamically even for the same terminal device.

In some embodiments, the first frequency domain bandwidth may be understood as an available subband, an available uplink subband, an actual available subband, or an actual available uplink subband in an uplink BWP.

In summary, the method provided by the present embodiment determines the transmission parameter based on the relevant parameter of the first frequency domain bandwidth, and the first frequency domain bandwidth is a subset of the second frequency domain bandwidth. Compared with the mode of using the second frequency domain bandwidth to determine the transmission parameter in the related art, the method can adapt to the influence of the new duplex mode on the actual available uplink bandwidth of the terminal device, and ensure that the uplink transmission of the terminal can fall within the available uplink resource.

FIG. 8 illustrates a flowchart of a method for uplink transmission according to an exemplary embodiment of the present disclosure. The method is performed by a network device, and the method includes the following operations.

**Operation 220:** an uplink channel or an uplink signal is received based on a transmission parameter, the transmission parameter is determined based on a relevant parameter of a first frequency domain bandwidth of the terminal device.

Here, the first frequency domain bandwidth is a subset of the second frequency domain bandwidth. Here, the second frequency domain bandwidth is an uplink bandwidth configured by the network device for the terminal device, and the first frequency domain bandwidth is an actual available uplink bandwidth determined in the second frequency domain bandwidth based on the configuration of the first duplex mode or the first time domain resource type. Exemplarily, the second frequency domain bandwidth is an uplink BWP of the terminal device. Exemplarily, the first duplex mode or the first time domain resource type is SBFD. In some embodiments, the first frequency domain bandwidth is a proper subset of the second frequency domain bandwidth, that is, the first frequency domain bandwidth belongs to the second frequency domain bandwidth and is smaller than the second frequency domain bandwidth.

In some embodiments, the uplink BWP is an uplink BWP that is activated for uplink transmission of the terminal device. The first frequency domain bandwidth is all or part of the bandwidth of the uplink BWP. Since the available uplink subbands differ depending on different duplex modes or different time domain resource types, the first frequency domain bandwidth may change dynamically even for the same terminal device.

In some embodiments, the first frequency domain bandwidth may be understood as an available subband, an available uplink subband, an actual available subband, or an actual available uplink subband in an uplink BWP.

In summary, the method provided by the present embodiment determines the transmission parameter based on the relevant parameter of the first frequency domain bandwidth, and the first frequency domain bandwidth is a subset of the second frequency domain bandwidth. Compared with the mode of using the second frequency domain bandwidth to determine the transmission parameter in the related art, the method can adapt to the influence of the new duplex mode on the actual available uplink bandwidth of the terminal device, and can accurately determine the transmission parameter even if the actual available uplink bandwidth of the terminal device is smaller than the second frequency domain bandwidth.

In an alternative embodiment based on FIG. 7 or FIG. 8, the first frequency domain bandwidth is a part of the available subband within the uplink BWP. The first frequency domain bandwidth is the actual available uplink bandwidth of the terminal device. The first frequency domain bandwidth includes at least one of: an uplink subband; uplink BWP; an actual subband; an intersection of the uplink subband and the uplink BWP; an actual uplink subband, which is the intersection of the uplink subband (also known as the nominal subband) and the uplink BWP; an actual uplink BWP, which is the intersection of the uplink subband and the uplink BWP; an uplink subband part within the uplink BWP; an available uplink subband part within the uplink BWP; an uplink subband part within the uplink BWP of the first time domain resource type; or an available uplink subband part within the uplink BWP of the first time domain resource type.

In some embodiments, the first frequency domain bandwidth is an intersection of the second frequency domain bandwidth and the third frequency domain bandwidth. The second frequency domain bandwidth is an active uplink bandwidth configured by the network device or the communication protocol for the terminal device. The third frequency domain bandwidth is an uplink subband in the currently used duplex mode or time domain resource type, typically determined by the relevant configuration of the cellular communication system. The intersection of the second frequency domain bandwidth and the third frequency domain bandwidth is the actual available uplink bandwidth of the terminal device, that is, the first frequency domain bandwidth.

Here, the second frequency domain bandwidth may be referred to as any one of an uplink BWP, an uplink bandwidth, an active uplink BWP, an active BWP, an active uplink bandwidth, or any equivalent term. The third frequency domain bandwidth may be referred to as any one of a subband, an uplink subband, a nominal uplink subband, an uplink subband within a frame structure, an uplink subband within a first time domain resource type, or any equivalent term. The first time domain resource type is a time domain resource type including an uplink subband and/or a downlink subband. For example, the first time domain resource type is at least one of an SBFD symbol, an SBFD slot, or an SBFD subframe.

The second frequency domain bandwidth is an uplink BWP, the third frequency domain bandwidth is an uplink subband, and the first frequency domain bandwidth is an intersection of the uplink subband and the uplink BWP. Since there may be various possibilities for the positions of the uplink BWP and the uplink subband, an exemplary representation is as follows.

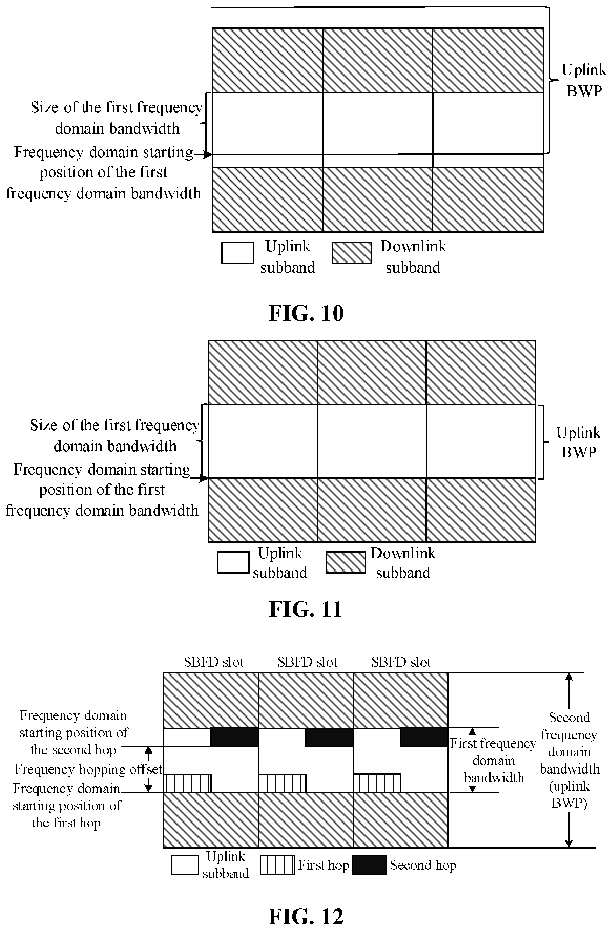

As shown in FIG. 9, in some examples, the uplink subband falls completely within the uplink BWP, and the first frequency domain bandwidth is the frequency domain bandwidth corresponding to the uplink subband. As shown in FIG. 10, in some embodiments, the uplink subband does not fall completely within the uplink BWP, and the first frequency domain bandwidth is the intersection of the uplink subband and the uplink BWP. As shown in FIG. 11, in some embodiments, the uplink subband and the uplink BWP are exactly the same, and the first frequency domain bandwidth is a frequency domain bandwidth corresponding to the uplink subband or the uplink BWP.

In some embodiments, the transmission parameter of the uplink transmission is determined based on the relevant parameter of the first frequency domain bandwidth. The relevant parameter of the first frequency domain bandwidth includes at least one of a frequency domain starting position of the first frequency domain bandwidth or a size of the first frequency domain bandwidth.

In some embodiments, the frequency domain starting position of the first frequency domain bandwidth is a starting position on a frequency domain dimension. The starting position may be represented by "first reference point + offset value". Here, the first reference point may be preconfigured by the network device, or predefined by the communication protocol. The first reference point may be any one of the frequency domain starting position of the system bandwidth, the frequency domain starting position of the current carrier (point A or CRB 0), the frequency domain starting position of the uplink BWP, or the frequency domain starting position of the uplink subband.

In some embodiments, the size of the first frequency domain bandwidth may be represented by frequency domain units. The frequency domain unit includes, but is not limited to, at least one of a Physical Resource Block (PRB), a Resource Block (RB), a Resource Element (RE), or a PRB group.

In an alternative embodiment based on FIG. 7 or FIG. 8, the transmission parameter of the uplink transmission includes at least one of a relevant parameter of the frequency hopping transmission or a relevant parameter of the uplink resource.

The relevant parameter of the frequency hopping transmission includes at least one of: a size of a frequency hopping offset; a number of bits of first indication information for indicating the size of the frequency hopping offset; a frequency domain resource allocation field; a frequency domain starting position of each hop; a frequency domain starting position of a first hop; or a frequency domain starting position of a second hop.

The size of the frequency hopping offset refers to the offset between the frequency domain starting positions of two adjacent hops. As shown in FIG. 12, the offset between the frequency domain starting position of the first hop and the frequency domain starting position of the second hop is the size of the frequency hopping offset. The size of the frequency hopping offset may be calculated using frequency domain units. The frequency domain unit includes, but is not limited to, at least one of a Physical Resource Block (PRB), a Resource Block (RB), a Resource Element (RE), or a PRB group.

The number of bits of the first indication information is dynamically variable. For example, the Frequency Domain Resource Assignment (FDRA) field of the RAR uplink grant includes several bits (that is, the first indication information). For example, as shown in FIG. 12, assuming that the FDRA field is 14 bits, the 1st to 2nd bits in the order from high to low indicate the above-described frequency hopping offset. The number of bits of the several bits may be one of multiple candidate bit numbers (1 or 2), and the actual number of bits needs to be determined based on the first frequency domain bandwidth.

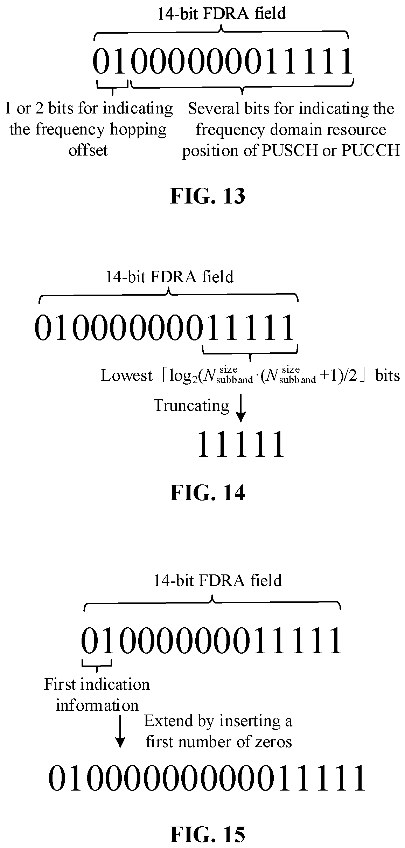

The frequency domain resource allocation field is information for indicating a frequency domain resource position of the PUSCH or the PUCCH. For example, the frequency domain resource allocation field of the RAR uplink grant includes 14 bits, and bits other than the first indication information among the 14 bits indicate information of the frequency domain resource position of the PUSCH or the PUCCH, as shown in FIG. 13.

Each hop in frequency hopping transmission has a respective frequency domain starting position. The frequency hopping transmission may be periodic frequency hopping, or aperiodic frequency hopping. Exemplarily, as shown in FIG. 12, the frequency hopping transmission occurs as periodically appearing first hop and second hop. The frequency domain starting position of each hop may be determined based on the periodically appearing frequency domain starting position of the first hop and the frequency domain starting position of the second hop.

The relevant parameter of the uplink resource includes a parameter for determining an uplink resource or an uplink resource set, which may be a PUCCH resource or a PDCCH resource. For example, an offset parameter of the PUCCH resource relative to the second reference point. Optionally, the second reference point may be preconfigured by the network device, or predefined by the communication protocol. The second reference point may be any one of the frequency domain starting position of the system bandwidth, the frequency domain starting position of the current carrier (point A or CRB0), the frequency domain starting position of the uplink BWP, the frequency domain starting position of the uplink subband, or the frequency domain starting position of the first frequency domain bandwidth.

In an alternative embodiment based on FIG. 7 or FIG. 8, the uplink transmission is a transmission for transporting an uplink channel and/or an uplink signal. The uplink channel includes at least one of a PUSCH or a PUCCH. The uplink signal includes at least one of an uplink signaling, uplink data, or an uplink reference signal. Exemplarily, the uplink signal includes: message 3 in the random access procedure and the Hybrid Automatic Repeat Request-ACK (HARQ-ACK) for message 4 in the random access procedure.

The following describes the modes for determining different transmission parameters (the following modes can be combined arbitrarily).
1. The size of a frequency hopping offset.

In some embodiments, the size of the frequency hopping offset is determined based on at least one of: one half of the first frequency domain bandwidth, or one quarter of the first frequency domain bandwidth.

In some embodiments, the size of the frequency hopping offset is indicated by the first indication information and/or the second indication information. For example, the size of the frequency hopping offset is indicated by a codepoint carried by the first indication information, and different codepoints correspond to different sizes of the frequency hopping offset. The second indication information is used to schedule the transmission of an uplink channel or an uplink signal, and the second indication information includes the first indication information. Optionally, the second indication information is RAR or DCI.

In one example, taking the uplink signal as message 3 in the random access procedure as an example, the correspondence between the number of bits of the first indication information, different codepoints and different frequency hopping offsets is shown in Table 2.

**Table 2**

| Number of bits of ***N***_{UL,hop} | Value of codepoint ***N***_{UL,hop} for indicating frequency hopping offset | Frequency hopping offset of second hop |
|---|---|---|
| 1 bit | 0 | $\left⌊{N}_{subband}^{size}/2\right⌋$ |
| | 1 | $\left⌊{N}_{subband}^{size}/4\right⌋$ |
| 2 bits | 00 | $\left⌊{N}_{subband}^{size}/2\right⌋$ |
| | 01 | $\left⌊{N}_{subband}^{size}/4\right⌋$ |
| | 10 | $- \left⌊{N}_{subband}^{size}/4\right⌋$ |
| | 11 | Reserved fields |

Here, the first indication information ***N***_{UL,hop} is 1 bit or 2 bits. When the first indication information ***N***_{UL,hop} is 1 bit, it includes 2 codepoints: 0 and 1. When the first indication information ***N***_{UL,hop} is 2 bits, it includes 4 codepoints: 00, 01, 10, and 11. ${N}_{subband}^{size}$ represents a size of the first frequency domain bandwidth. 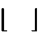 represents rounding down.

For example, the terminal device receives the first indication information from the network device, and determines the size of the frequency hopping offset based on the codepoint indicated by the first indication information and the correspondence shown in Table 2 above.

Since the frequency hopping offset is determined based on the size of the first frequency domain bandwidth, such as one half or one quarter of the first frequency domain bandwidth, it can be guaranteed to a certain extent that the frequency domain resource position of the second hop is still inside the first frequency domain bandwidth and does not exceed the first frequency domain bandwidth.

In some embodiments, when the time domain resource occupied by the current hop is of a first time domain resource type (SBFD), the size of the frequency hopping offset is determined based on the relevant parameter of the first frequency domain bandwidth. When the time domain resource occupied by the current hop is of the second time domain resource type (non-SBFD), the size of the frequency hopping offset is determined based on the relevant parameter of the second frequency domain bandwidth. When the size of the frequency hopping offset is determined based on the relevant parameter of the second frequency domain bandwidth, the first frequency domain bandwidth in Table 2 may be replaced with the second frequency domain bandwidth.

2. The number of bits of the first indication information.

The first indication information indicates the size of the frequency hopping offset.

In some embodiments, the number of bits of the first indication information is determined based on a size relationship between the size of the first frequency domain bandwidth and the first threshold.

In some embodiments, in a case that the size of the first frequency domain bandwidth is smaller than the first threshold, the number of bits of the first indication information is a first number; and/or, in a case that the size of the first frequency domain bandwidth is greater than or equal to the first threshold, the number of bits of the first indication information is the second number.

**Table 3**

| Number of PRBs of first frequency domain bandwidth | Codepoints of first indication information ***N***_{UL,hop} | Frequency hopping offset of second hop |
|---|---|---|
| ${N}_{subband}^{size} < 50$ | 0 | $\left⌊{N}_{subband}^{size}/2\right⌋$ |
| | 1 | $\left⌊{N}_{subband}^{size}/4\right⌋$ |
| ${N}_{subband}^{size} \geq 50$ | 00 | $\left⌊{N}_{subband}^{size}/2\right⌋$ |
| | 01 | $\left⌊{N}_{subband}^{size}/4\right⌋$ |
| | 10 | $- \left⌊{N}_{subband}^{size}/4\right⌋$ |
| | 11 | Reserved fields |

Here, ${N}_{subband}^{size}$ represents a size of the first frequency domain bandwidth. └┘ represents rounding down.

Taking the first threshold of 50 PRBs as an example, when the size of the first frequency domain bandwidth is smaller than 50, the number of bits of the first indication information is 1 bit. When the size of the first frequency domain bandwidth is greater than or equal to 50, the number of bits of the first indication information is 2 bits.

As can be seen with reference to FIG. 11, since the first indication information is included in the FDRA field, if the determination of the number of bits of the first indication information is not accurate enough, an erroneous interpretation result may occur. By making it clear that the number of bits of the first indication information is determined based on the size of the first frequency domain bandwidth, it is possible to guarantee the determination accuracy of the first indication information. In addition, the number of bits of the first indication information is determined based on the size of the first frequency domain bandwidth, so that the number of bits required for the first indication information can be saved to a certain extent, that is, more bits can be freed up for indicating the position of the frequency domain bandwidth of uplink transmission, and the indication can be made more accurate.

In other embodiments, the number of bits of the first indication information is determined based on a size relationship between the size of the second frequency domain bandwidth and the first threshold.

In some embodiments, in a case that the size of the second frequency domain bandwidth is smaller than the first threshold, the number of bits of the first indication information is a first number; and/or, in a case that the size of the second frequency domain bandwidth is greater than or equal to the first threshold, the number of bits of the first indication information is the second number.

**Table 4**

| Number of PRBs of second frequency domain bandwidth | Codepoints of first indication information ***N*_{UL,hop}** | Frequency hopping offset of second hop |
|---|---|---|
| ${N}_{BWP}^{size} < 50$ | 0 | $\left⌊{N}_{subband}^{size}/2\right⌋$ |
| | 1 | $\left⌊{N}_{subband}^{size}/4\right⌋$ |
| ${N}_{BWP}^{size} \geq 50$ | 00 | $\left⌊{N}_{subband}^{size}/2\right⌋$ |
| | 01 | $\left⌊{N}_{subband}^{size}/4\right⌋$ |
| | 10 | $- \left⌊{N}_{subband}^{size}/4\right⌋$ |
| | 11 | Reserved fields |

Here, ${N}_{BWP}^{size}$ represents a size of the second frequency domain bandwidth. └┘ represents rounding down.

Taking the first threshold of 50 PRBs as an example, when the size of the second frequency domain bandwidth is smaller than 50, the number of bits of the first indication information is 1 bit. When the size of the second frequency domain bandwidth is greater than or equal to 50, the number of bits of the first indication information is 2 bits.

As can be seen with reference to FIG. 13, since the first indication information is included in the FDRA field, if the determination of the number of bits of the first indication information is not accurate enough, an erroneous interpretation result may occur. By making it clear that the number of bits of the first indication information is determined based on the size of the second frequency domain bandwidth, it is possible to guarantee the determination accuracy of the first indication information. Further, the number of bits of the first indication information is determined based on the size of the second frequency domain bandwidth, and the existing technologies can be multiplexed to a maximum extent with minimal protocol modification.

It should be noted that the above two modes may be used in combination or may be used alone. For example, in a case that both the SBFD slot and the non-SBFD slot are present, when currently in the SBFD slot (that is, the first time domain resource type), the number of bits of the first indication information is determined based on a size relationship between the size of the first frequency domain bandwidth and the first threshold; when currently in the non-SBFD slot (that is, the second time domain resource type) is currently in place, the number of bits of the first indication information is determined based on a size relationship between the size of the second frequency domain bandwidth and the first threshold. For another example, the number of bits of the first indication information is always determined based on the size relationship between the size of the first frequency domain bandwidth and the first threshold, regardless of whether it is currently in the SBFD slot or the non-SBFD slot. For yet another example, the number of bits of the first indication information is always determined based on the size relationship between the size of the second frequency domain bandwidth and the first threshold, regardless of whether it is currently in the SBFD slot or the non-SBFD slot.

3. The frequency domain resource allocation field.

In some embodiments, the mode in which the frequency domain resource allocation field is processed is determined based on a size relationship between the size of the first frequency domain bandwidth and the second threshold. Taking the second threshold of 180 PRBs as an example, when the size of the first frequency domain bandwidth is smaller than 180, the frequency domain resource allocation field is processed in the first mode. When the size of the first frequency domain bandwidth is greater than or equal to 180, the frequency domain resource allocation field is processed in the second mode.

Here, the first mode includes: truncating a bit sequence in a frequency domain resource allocation field based on the size of the first frequency domain bandwidth to obtain a truncated frequency domain resource allocation field (or a truncated frequency domain resource allocation domain, or a truncated frequency domain resource allocation indication information). The second mode includes: expanding the bit sequence in the frequency domain resource allocation field based on the size of the first frequency domain bandwidth to obtain the expanded frequency domain resource allocation field (or the expanded frequency domain resource allocation domain, or the expanded frequency domain resource allocation indication information). The frequency domain resource allocation field may be referred to simply as an FDRA field.

In some embodiments, the FDRA field includes first indication information. A first mode includes: truncating the lowest $\left⌈{log}_{2}\left({N}_{subband}^{size}⋅\left({N}_{subband}^{size}+1\right)/2\right)\right⌉$ bits of the FDRA field.

And/or, the second mode includes: inserting a first number of most significant bits after the first indication information in the FDRA field, where the first value is a difference of $\left⌈{log}_{2}\left({N}_{subband}^{size}⋅\left({N}_{subband}^{size}+1\right)/2\right)\right⌉$ minus M, and M is a preset value.

Exemplarily, a 14-bit FDRA field in a RAR uplink grant is interpreted by:
If the size of the first frequency domain bandwidth ${N}_{subband}^{size} \leq 180$ PRBs, the lowest $\left⌈{log}_{2}\left({N}_{subband}^{size}⋅\left({N}_{subband}^{size}+1\right)/2\right)\right⌉$ bits of the FDRA field is truncated, and the truncated FDRA field is interpreted according to the interpretation mode of the DCI format 0_0 FDRA in the communication protocol TS 38.212, as shown in FIG. 14.

Otherwise, after the first indication information *N_{UL,hop}* bits in the FDRA field, $\left⌈{log}_{2}\left({N}_{subband}^{size}⋅\left({N}_{subband}^{size}+1\right)/2\right)\right⌉ - 14$ most significant bits are inserted and set to 0, and the extended FDRA field is interpreted according to the interpretation mode of the DCI format 0_0 FDRA in TS 38.212. As shown in FIG. 15, the extension process is illustrated as an example of $\left⌈{log}_{2}\left({N}_{subband}^{size}⋅\left({N}_{subband}^{size}+1\right)/2\right)\right⌉$ is 17, M is 14, and the first number is equal to 3.

According to the above mode, it is possible to ensure that the message 3 falls on the first frequency domain bandwidth after frequency hopping, and the number of bits actually required by the FDRA can be calculated according to the size of the first frequency domain bandwidth, thereby improving the accuracy of determining the number of bits for frequency domain resource allocation. When the bandwidth of the uplink BWP is large, it provides greater flexibility.

It should be noted that the occupied time domain resource is of the first time domain resource type (SBFD), the processing mode of frequency domain resource allocation adopts the above mode, i.e., it is determined based on the relevant parameter of the first frequency domain bandwidth. When the occupied time domain resource is of the second time domain resource type (non-SBFD), the processing mode of frequency domain resource allocation is determined based on the relevant parameter of the second frequency domain bandwidth.

For example, if the size of the first frequency domain bandwidth ${N}_{BWP}^{size} \leq 180$ PRBs, the lowest $\left⌈{log}_{2}\left({N}_{BWP}^{size}⋅\left({N}_{BWP}^{size}+1\right)/2\right)\right⌉$ bits of the FDRA field is truncated, and the truncated FDRA field is interpreted according to the interpretation mode of the DCI format 0_0 FDRA in the communication protocol TS 38.212.

Otherwise, after the first indication information *N_{UL,hop}* bits in the FDRA field, $\left⌈{log}_{2}\left({N}_{BWP}^{size}⋅\left({N}_{BWP}^{size}+1\right)/2\right)\right⌉ - 14$ most significant bits are inserted and set to 0, and the extended FDRA field is interpreted according to the interpretation mode of the DCI format 0_0 FDRA in TS 38.212. The extension process is illustrated as an example of $\left⌈{log}_{2}\left({N}_{BWP}^{size}⋅\left({N}_{BWP}^{size}+1\right)/2\right)\right⌉$ is 17, M is 14, and the first number is equal to 3.

Here, ┌ ┐ is an upward rounding symbol.

4. The offset value parameter for determining an uplink channel or a resource set corresponding to the uplink channel.

The offset value parameter is an offset of the frequency domain starting position of the resource set relative to the frequency domain starting position of the first frequency domain bandwidth. This offset value parameter may be represented or calculated using frequency domain units, such as the number of PRBs.

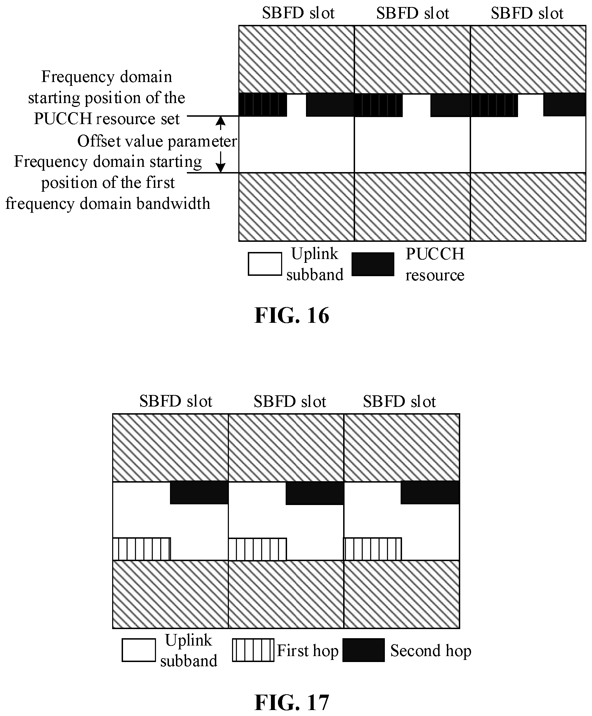

Taking as an example that the uplink channel is the PUCCH used for HARQ-ACK feedback for message 4, the frequency domain starting position of the PUCCH resource set is determined based on the offset value parameter. The offset value parameter is an offset of the frequency domain starting position of the PUCCH resource set relative to the frequency domain starting position of the first frequency domain bandwidth, as shown in FIG. 16.

In some embodiments, the size of the offset value parameter is determined based on the size of the first frequency domain bandwidth.

**Table 5**

| Index | PUCCH format | First symbol | Number of symbols | Offset value parameter ${RB}_{subband}^{offset}$ | Cyclic shift index set |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left⌊{N}_{subband}^{size}/4\right⌋$ | {0, 3, 6, 9} |

Here, Table 5 shows the mode of common PUCCH resource set. The index is indicated by the configuration signaling from the network device, such as the Radio Resource Control (RRC) signaling. The parameters in the fifth column are the offset value parameters described above.

In some embodiments, the SBFD slot and the non-SBFD slot share the above Table 5, and when the symbol in which the PUCCH resource is located is an SBFD symbol, the offset value parameter is an offset of the frequency domain starting position of the resource set relative to the frequency domain starting position of the first frequency domain bandwidth. When the symbol in which the PUCCH resource is located is a non-SBFD symbol, the offset value parameter is an offset of the frequency domain starting position of the resource set relative to the frequency domain starting position of the second frequency domain bandwidth. In other words, the SBFD symbol refers to Table 5 to interpret the offset value parameter, and the non-SBFD slot refers to Table 6 to interpret the offset value parameter.

**Table 6**

| | | | | | |
|---|---|---|---|---|---|
| Index | PUCCH format | First symbol | Number of symbols | Offset value parameter ${RB}_{subband}^{offset}$ | Cyclic shift index set |
| 0 | 0 | 12 | 2 | 0 | {0, 3} |
| 1 | 0 | 12 | 2 | 0 | {0, 4, 8} |
| 2 | 0 | 12 | 2 | 3 | {0,4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left⌊{N}_{BWP}^{size}/4\right⌋$ | {0, 3, 6, 9} |

Here, ${N}_{BWP}^{size}$ is the size of the second frequency domain bandwidth, and $\left⌊{N}_{BWP}^{size}/4\right⌋$ is a downward rounded value of one quarter of the second frequency domain bandwidth.

5. The frequency domain starting position of each hop/first hop/second hop.

In some embodiments, taking the uplink channel as a PUSCH as an example, the frequency domain starting position of the second hop is determined according to at least one of:
the size of the frequency hopping offset; a size of the first frequency domain bandwidth; or the second indication information for scheduling an uplink channel or an uplink signal. Optionally, the second indication information is the RAR uplink grant.

In some embodiments, the second indication information includes first indication information, the size of the frequency hopping offset is indicated by a codepoint carried by the first indication information, and different codepoints correspond to different sizes of frequency hopping offsets: the number of bits of the first indication information is determined according to the size of the first frequency domain bandwidth or the size of the second frequency domain bandwidth.

Schematically, for the intra-slot frequency hopping of message 3, as shown in FIG. 16, the frequency domain starting position (e.g., the starting RB) RBₛₜₐᵣₜ of each hop is: ${RB}_{start} = \left\{\begin{matrix}{RB}_{start} & i = 0 \\ \left({RB}_{start}+{RB}_{offset}\right) mod {N}_{subband}^{size} & i = 1\end{matrix}\right.$

Here, for the first hop, i =0; for the second hop, i =1. RBₛₜₐᵣₜ is obtained by the FDRA of the PUSCH in the RAR uplink grant, RB_{offset} is obtained jointly according to Table 3 or Table 4, and the first indication information *N_{UL,hop}*.

For inter-slot frequency hopping of Msg 3, the frequency domain starting position (e.g., the starting RB) ${RB}_{start} \left({n}_{s}^{μ}\right)$ in the slot ${n}_{s}^{μ}$ is: ${RB}_{start} \left({n}_{s}^{μ}\right) = \left\{\begin{matrix}{RB}_{start} & {n}_{s}^{μ} mod 2 = 0 \\ \left({RB}_{start}+{RB}_{offset}\right) {modN}_{subband}^{size} & {n}_{s}^{μ} mod 2 = 1\end{matrix}\right.$

In some embodiments, taking the uplink channel as a PUCCH as an example, the frequency domain starting position of each hop, the frequency domain starting position of the first hop, and the frequency domain starting position of the second hop are determined based on at least one of: an offset value parameter, a size of the first frequency domain bandwidth, or a frequency domain starting position of the first frequency domain bandwidth. The offset value parameter is an offset of the frequency domain starting position of the PUCCH resource set relative to the frequency domain starting position of the first frequency domain bandwidth.

In some embodiments, the offset value parameter is determined based on the size of the first frequency domain bandwidth.

In some embodiments, the frequency domain starting position occupied by each hop/first hop/second hop is determined based on at least one of: an index corresponding to the PUCCH resource set, an offset value parameter, a number of PRBs included in the PUCCH resource set, an initial cyclic shift index, or a total number of initial cyclic shift indexes.

In some embodiments, the mode of determining the frequency domain starting position occupied by each hop is determined based on the index corresponding to the PUCCH resource set. For example, when $\left⌊{r}_{PUCCH}/8\right⌋ = 0$, the first determination mode is used; When $\left⌊{r}_{PUCCH}/8\right⌋ = 1$, the second determination mode is used.

In some embodiments, the first determination mode for the frequency domain starting position occupied by the first hop includes determining based on a sum of the first value and the second value. The first value is related to the offset value parameter and the number of PRBs included in the PUCCH resource set, and the second value is related to the index corresponding to the PUCCH resource set, the total number of initial cyclic shift indexes, and the number of PRBs included in the PUCCH resource set. For example, the first value is ${RB}_{subband}^{offset} ⋅ {N}_{RB}$ *,* and the second value is $\left⌊{r}_{PUCCH}/{N}_{CS}\right⌋ ⋅ {N}_{RB}$.

In some embodiments, the second determination mode for the frequency domain starting position occupied by the first hop includes determining based on the difference obtained by subtracting the first value and a fourth value from a third value. The third value is the size of the first frequency domain bandwidth ${N}_{subband}^{size}$, and the first value is related to the offset value parameter and the number of PRBs included in the PUCCH resource set, for example, the first value is ${RB}_{subband}^{offset} ⋅ {N}_{RB}$*.* The fourth value is related to the index corresponding to the PUCCH resource set and the total number of initial cyclic shift indexes, for example, the fourth numerical value is ( $1 + \left⌊\left({r}_{PUCCH}-8\right)/{N}_{CS}\right⌋$)*.*

In some embodiments, the first determination mode for the frequency domain starting position occupied by the second hop includes determining based on the difference obtained by subtracting the first value and a fifth value from the third value. The third value is the size of the first frequency domain bandwidth ${N}_{subband}^{size}$, and the first value is related to the offset value parameter and the number of PRBs included in the PUCCH resource set, for example, the first value is ${RB}_{subband}^{offset} ⋅ {N}_{RB}$*.* The fifth value is related to the index corresponding to the PUCCH resource set, the total number of initial cyclic shift indexes, and the number of PRBs included in the PUCCH resource, for example, the fifth value is $\left(1+\left⌊{r}_{PUCCH}/{N}_{CS}\right⌋\right) ⋅ {N}_{RB}$.

In some embodiments, the second determination mode for the frequency domain starting position occupied by the second hop includes determining based on a sum of the first value and the sixth value. The first value is related to the offset value parameter and the number of PRBs included in the PUCCH resource set, and the sixth value is related to the index corresponding to the PUCCH resource set, the total number of initial cyclic shift indexes, and the number of PRBs included in the PUCCH resource set. For example, the first value is ${RB}_{subband}^{offset} ⋅ {N}_{RB}$ , and the sixth value is $\left⌊\left({r}_{PUCCH}-8\right)/{N}_{CS}\right⌋ ⋅ {N}_{RB}$.

In one example:
For frequency hopping transmission of HARQ-ACK of Msg 4, the RB occupied by each hop is determined as follows.
- For $\left⌊{r}_{PUCCH}/8\right⌋ = 0$, the lowest RPB index of the first hop is ${RB}_{subband}^{offset} ⋅ {N}_{RB} + \left⌊{r}_{PUCCH}/{N}_{CS}\right⌋ ⋅ {N}_{RB}$ ; the lowest RPB index of the second hop is ${N}_{subband}^{size} - {RB}_{subband}^{offset} ⋅ {N}_{RB} - \left(1+\left⌊{r}_{PUCCH}/{N}_{CS}\right⌋\right) ⋅ {N}_{RB}$ ; the initial cyclic shift index of the PUCCH is (*r*_{PUCCH}-8)mod*N_{CS}*.
- For $\left⌊{r}_{PUCCH}/8\right⌋ = 1$, the lowest RPB index of the first hop is ${N}_{subband}^{size} - {RB}_{subband}^{offset} ⋅ {N}_{RB} - \left(1+\left⌊\left({r}_{PUCCH}-8\right)/{N}_{CS}\right⌋\right) ⋅ {N}_{RB}$ ; the lowest RPB index of the second hop is ${RB}_{subband}^{offset} ⋅ {N}_{RB} + \left⌊\left({r}_{PUCCH}-8\right)/{N}_{CS}\right⌋ ⋅ {N}_{RB}$; the initial cyclic shift index of the PUCCH is *r*_{PUCCH}mod*N*_{CS}.
- Where
- *N_{CS}* is the total number of initial cyclic shift indexes included in the cyclic shift index set field in Table 5.
- *N_{RB}* is the number of PRBs included in the PUCCH resource.
- *r*_{PUCCH} is an index corresponding to the PUCCH resource set, indicated by the higher layer signaling, such as the RRC signaling.
${RB}_{subband}^{offset}$ represents an offset of the frequency domain starting position of the PUCCH resource set relative to the lowest PRB of the first frequency domain bandwidth.

In some embodiments, when the time domain resource occupied by the current hop is of a first time domain resource type (SBFD), it is determined based on the relevant parameter of the first frequency domain bandwidth. When the time domain resource occupied by the current hop is of the second time domain resource type (non-SBFD), it is determined based on the relevant parameter of the second frequency domain bandwidth.

Optionally, in various embodiments of the present disclosure, the time domain resources corresponding to the uplink channel or the uplink signal are all of the first time domain resource type, such as the SBFD slot. Alternatively, part of the time domain resource corresponding to the uplink channel or the uplink signal is of the first time domain resource type, such as an SBFD slot, and the other part is of the second time domain resource type, such as a non-SBFD slot. When the occupied time domain resource is of a first time domain resource type (SBFD), the transmission parameter is determined based on the relevant parameter of the first frequency domain bandwidth. When the occupied time domain resource is of the second time domain resource type (non-SBFD), the transmission parameter is determined based on the relevant parameter of the second frequency domain bandwidth.

In some embodiments, all or part of the transmission parameters are configured for the first time domain resource type and the second time domain resource type, respectively. The type of transmission parameter includes at least one of: a size of a frequency hopping offset; a number of bits of first indication information for indicating the size of the frequency hopping offset; a frequency domain resource allocation field; a frequency domain starting position of each hop; a frequency domain starting position of a first hop; a frequency domain starting position of a second hop; or an offset value parameter used to determine a resource set corresponding to the uplink channel.

**Configuration mode 1:** the terminal device receives a first configuration and a second configuration. The first configuration is used to configure a first transmission parameter and/or a first parameter for determining the first transmission parameter. The second configuration is used to configure a second transmission parameter and/or a second parameter for determining the second transmission parameter.

The first transmission parameter is used for uplink transmission under the first time domain resource type, and the second transmission parameter is used for uplink transmission under the second time domain resource type.

**Configuration mode 2:** the terminal device receives the first transmission parameter and the first offset value. The first transmission parameter and the first offset value are used to determine the second transmission parameter.

The first transmission parameter is used for uplink transmission under the first time domain resource type, and the second transmission parameter is used for uplink transmission under the second time domain resource type.

Here, the first transmission parameter and the first offset value may be in the same configuration or may be in different configurations. Certainly, the possibility that the above-mentioned first offset value is predefined by the communication protocol is not excluded.

**Configuration mode 3:** the terminal device receives the first parameter and the second offset value. The first parameter is used to determine the first transmission parameter. The first transmission parameter and the second offset value are used to determine the second transmission parameter.

The first transmission parameter is used for uplink transmission under the first time domain resource type, and the second transmission parameter is used for uplink transmission under the second time domain resource type.

Here, the first parameter and the second offset value may be in the same configuration or may be in different configurations. Certainly, the possibility that the above-mentioned second offset value is predefined by the communication protocol is not excluded.

**Configuration mode 4:** the terminal device receives the second transmission parameter and the third offset value. The second transmission parameter and the third offset value are used to determine the first transmission parameter.

The first transmission parameter is used for uplink transmission under the first time domain resource type, and the second transmission parameter is used for uplink transmission under the second time domain resource type.

Here, the second transmission parameter and the third offset value may be in the same configuration or may be in different configurations. Certainly, the possibility that the above-mentioned third offset value is predefined by the communication protocol is not excluded.

**Configuration mode 5:** the terminal device receives the second parameter and the fourth offset value. The second parameter is used to determine the second transmission parameter. The second transmission parameter and the fourth offset value are used to determine the first transmission parameter.

The first transmission parameter is used for uplink transmission under the first time domain resource type, and the second transmission parameter is used for uplink transmission under the second time domain resource type.

In some embodiments, there are many kinds of transmission parameters, each transmission parameter may be configured using any of the above five configuration modes, and different transmission parameters may be configured using different configuration modes. In this case, the possibility that a part of the transmission parameters are shared configurations for the first time domain resource type and the second time domain resource type is not excluded.

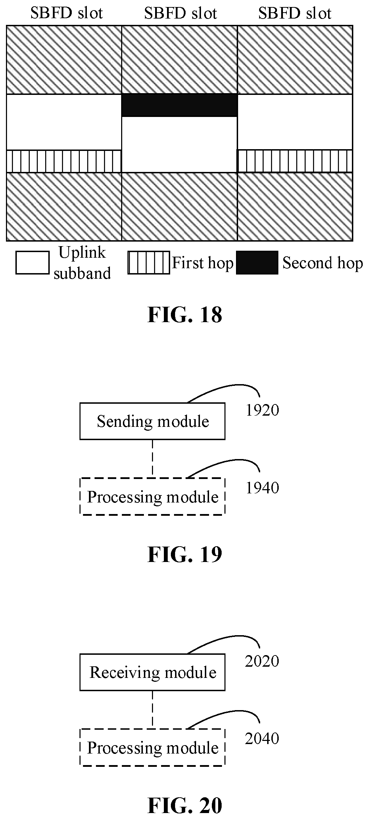

FIG. 19 illustrates a block diagram of an apparatus for uplink transmission according to an exemplary embodiment of the present disclosure. The apparatus may be implemented as part of a terminal device. The apparatus includes: a sending module 1920, which is configured to send an uplink channel or an uplink signal based on a transmission parameter, the transmission parameter being determined based on a relevant parameter of a first frequency domain bandwidth.

Here, the first frequency domain bandwidth is a subset of the second frequency domain bandwidth. Here, the second frequency domain bandwidth is an available uplink bandwidth configured by the network device for the terminal device, and the first frequency domain bandwidth is an actual available uplink bandwidth determined in the second frequency domain bandwidth based on the configuration of the first duplex mode or the first time domain resource type. Exemplarily, the second frequency domain bandwidth is an uplink BWP of the terminal device. In some embodiments, the first frequency domain bandwidth is a proper subset of the second frequency domain bandwidth, that is, the first frequency domain bandwidth belongs to the second frequency domain bandwidth and is smaller than the second frequency domain bandwidth.

In some embodiments, the uplink BWP is an uplink BWP that is activated for uplink transmission of the terminal device. The first frequency domain bandwidth is all or part of the bandwidth of the uplink BWP. Since the available uplink subbands differ depending on different duplex modes or different time domain resource types, the first frequency domain bandwidth may change dynamically even for the same terminal device.

In some embodiments, the first frequency domain bandwidth may be understood as an available subband, an available uplink subband, an actual available subband, or an actual available uplink subband in an uplink BWP.

In some embodiments, the transmission parameter of the uplink transmission includes at least one of a relevant parameter of the frequency hopping transmission or a relevant parameter of the uplink resource.

The relevant parameter of the frequency hopping transmission includes at least one of: a size of a frequency hopping offset; a number of bits of first indication information for indicating the size of the frequency hopping offset; frequency domain resource allocation; a frequency domain starting position of each hop; a frequency domain starting position of a first hop; or a frequency domain starting position of a second hop.

In some embodiments, the apparatus further includes a processing module 1940 for determining at least one of the above transmission parameters based on the relevant parameter of the first frequency domain bandwidth, and the determination mode may be referred to the previous relevant chapters, and will not be described again.

In some embodiments, the apparatus further includes a receiving module for receiving at least one of: the first indication information, the second indication information, the configuration of the first time domain resource type, the configuration of the second time domain resource type, the configuration of the first frequency domain bandwidth, the configuration of the second frequency domain bandwidth, the configuration of the third frequency domain bandwidth, the configuration of the transmission parameter, or the configuration of the parameter for determining the transmission parameter.

The above sending module 1920 may be implemented by a transmitter, the processing module 1940 may be implemented by a processor or chip, and the receiving module may be implemented by a receiver.

In summary, the apparatus provided by the present embodiment determines the transmission parameter based on the relevant parameter of the first frequency domain bandwidth, and the first frequency domain bandwidth is a subset of the second frequency domain bandwidth. Compared with the mode of using the second frequency domain bandwidth to determine the transmission parameter in the related art, the method can adapt to the influence of the new duplex mode on the actual available uplink bandwidth of the terminal device, and can accurately determine the transmission parameter even if the actual available uplink bandwidth of the terminal device is smaller than the second frequency domain bandwidth.

FIG. 20 illustrates a flowchart of an apparatus for uplink transmission according to an exemplary embodiment of the present disclosure. The apparatus may be implemented as part of a network device, the apparatus includes: a receiving module 2020, which is configured to receive an uplink channel or an uplink signal based on a transmission parameter, the transmission parameter is determined based on a relevant parameter of a first frequency domain bandwidth of the terminal device.

Here, the first frequency domain bandwidth is a subset of the second frequency domain bandwidth. Here, the second frequency domain bandwidth is an available uplink bandwidth configured by the network device for the terminal device, and the first frequency domain bandwidth is an actual available uplink bandwidth determined in the second frequency domain bandwidth based on the configuration of the first duplex mode or the first time domain resource type. Exemplarily, the second frequency domain bandwidth is an uplink BWP of the terminal device. In some embodiments, the first frequency domain bandwidth is a proper subset of the second frequency domain bandwidth, that is, the first frequency domain bandwidth belongs to the second frequency domain bandwidth and is smaller than the second frequency domain bandwidth.

In some embodiments, the uplink BWP is an uplink BWP that is activated for uplink transmission of the terminal device. The first frequency domain bandwidth is all or part of the bandwidth of the uplink BWP. Since the available uplink subbands differ depending on different duplex modes or different time domain resource types, the first frequency domain bandwidth may change dynamically even for the same terminal device.

In some embodiments, the first frequency domain bandwidth may be understood as an available subband, an available uplink subband, an actual available subband, or an actual available uplink subband in an uplink BWP.

In some embodiments, the transmission parameter of the uplink transmission includes at least one of a relevant parameter of the frequency hopping transmission or a relevant parameter of the uplink resource. The relevant parameter of the frequency hopping transmission includes at least one of: a size of a frequency hopping offset; a number of bits of first indication information for indicating the size of the frequency hopping offset; frequency domain resource allocation; a frequency domain starting position of each hop; a frequency domain starting position of a first hop; or a frequency domain starting position of a second hop.

In some embodiments, the apparatus further includes a processing module 2040 for determining at least one of the above transmission parameters based on the relevant parameter of the first frequency domain bandwidth, and the determination mode may be referred to the previous relevant chapters, and will not be described again.

In some embodiments, the apparatus further includes a sending module for sending at least one of: the first indication information, the second indication information, the configuration of the first time domain resource type, the configuration of the second time domain resource type, the configuration of the first frequency domain bandwidth, the configuration of the second frequency domain bandwidth, the configuration of the third frequency domain bandwidth, the configuration of the transmission parameter, or the configuration of the parameter for determining the transmission parameter.

The above receiving module 2020 may be implemented by a receiver, the processing module 2040 may be implemented by a processor or chip, and the sending module may be implemented by a transmitter.

In summary, the apparatus provided by the present embodiment determines the transmission parameter based on the relevant parameter of the first frequency domain bandwidth, and the first frequency domain bandwidth is a subset of the second frequency domain bandwidth. Compared with the mode of using the second frequency domain bandwidth to determine the transmission parameter in the related art, the method can adapt to the influence of the new duplex mode on the actual available uplink bandwidth of the terminal device, and can accurately determine the transmission parameter even if the actual available uplink bandwidth of the terminal device is smaller than the second frequency domain bandwidth.

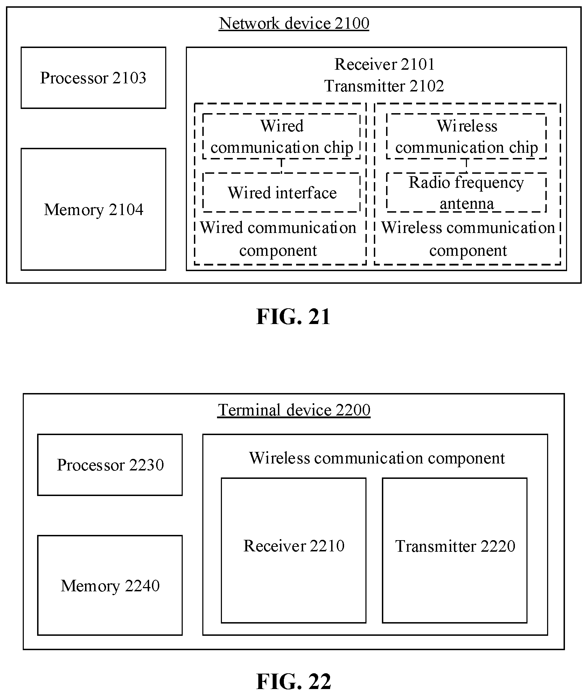

FIG. 21 illustrates a schematic structural diagram of a network device 2100 provided by an exemplary embodiment of the present disclosure, including at least one of a receiver 2101, a transmitter 2102, a processor 2103, a memory 2104, or a bus (not shown). The network device 2100 may be configured to perform some or all of the operations performed by the network device described above.

The receiver 2101 is configured to implement a receiving function, and the transmitter 2102 is configured to implement a sending function.

The receiver 2101 is configured to receive an uplink channel or an uplink signal based on a transmission parameter, the transmission parameter is determined based on a relevant parameter of a first frequency domain bandwidth of the terminal device.

Here, the first frequency domain bandwidth is a subset of the second frequency domain bandwidth. Here, the second frequency domain bandwidth is an available uplink bandwidth configured by the network device for the terminal device, and the first frequency domain bandwidth is an actual available uplink bandwidth determined in the second frequency domain bandwidth based on the configuration of the first duplex mode or the first time domain resource type. Exemplarily, the second frequency domain bandwidth is an uplink BWP of the terminal device. In some embodiments, the first frequency domain bandwidth is a proper subset of the second frequency domain bandwidth, that is, the first frequency domain bandwidth belongs to the second frequency domain bandwidth and is smaller than the second frequency domain bandwidth.

In some embodiments, the uplink BWP is an uplink BWP that is activated for uplink transmission of the terminal device. The first frequency domain bandwidth is all or part of the bandwidth of the uplink BWP. Since the available uplink subbands differ depending on different duplex modes or different time domain resource types, the first frequency domain bandwidth may change dynamically even for the same terminal device.

In some embodiments, the first frequency domain bandwidth may be understood as an available subband, an available uplink subband, an actual available subband, or an actual available uplink subband in an uplink BWP.

In some embodiments, the transmission parameter of the uplink transmission includes at least one of a relevant parameter of the frequency hopping transmission or a relevant parameter of the uplink resource.

The relevant parameter of the frequency hopping transmission includes at least one of: a size of a frequency hopping offset; a number of bits of first indication information for indicating the size of the frequency hopping offset; frequency domain resource allocation; a frequency domain starting position of each hop; a frequency domain starting position of a first hop; or a frequency domain starting position of a second hop.

In some embodiments, the processor 2103 is configured to determine at least one of the above transmission parameters based on the relevant parameter of the first frequency domain bandwidth, and the determination mode may be referred to the previous relevant chapters, and will not be described again.

In some embodiments, the transmitter 2102 is configured to send at least one of: the first indication information, the second indication information, the configuration of the first time domain resource type, the configuration of the second time domain resource type, the configuration of the first frequency domain bandwidth, the configuration of the second frequency domain bandwidth, or the configuration of the third frequency domain bandwidth.

In some embodiments, the receiver 2101 and the transmitter 2102 may be implemented as a communication component, which may be a communication chip, which may be referred to as a transceiver. In some embodiments, the receiver 2101 may be used to implement the functions and operations of the above-described receiving module, and the transmitter 2102 may be used to implement the functions and operations of the above-described sending module.

In some embodiments, the receiver 2101 and the transmitter 2102 may be implemented as a wireless communication component and/or a wired communication component. Optionally, the wireless communication component includes a wireless communication chip and/or a radio frequency antenna. Optionally, the wired communication component includes a wired communication chip and/or a wired interface.

The processor 2103 includes one or more processing cores, and executes various functional applications and information processing by running software programs and modules. In some embodiments, the processor 2103 may be used to implement the functions and operations of the processing module described above.

The memory 2104 may be used to store a computer program executed by the processor 2103 for executing the computer program to implement various operations in the method embodiments described above.

In some embodiments, the memory 2104 may be connected to the processor 2103, the receiver 2101, and transmitter 2102.

Further, the Memory 2104 may be implemented by any type of volatile or nonvolatile storage device including, but not limited to, magnetic or optical disks, an Electrically-Erasable Programmable Read Only Memory (EEPROM), an Erasable Programmable Read Only Memory (EPROM), a Static Random Access Memory (SRAM), a Read-Only Memory (ROM), a magnetic memory, a flash memory, and a Programmable Read-Only Memory (PROM).

In some embodiments, the receiver 2101 independently receives signals/data, or the processor 2103 controls the receiver 2101 to receive signals/data, or the processor 2103 requests the receiver 2101 to receive signals/data, or the processor 2103 cooperates with the receiver 2101 to receive signals/data.

In some embodiments, the transmitter 2102 sends signals/data independently, or the processor 2103 controls the transmitter 2102 to send signals/data, or the processor 2103 requests the transmitter 2102 to send signals/data, or the processor 2103 cooperates with the transmitter 2102 to send signals/data.

For details not described in detail in this embodiment, refer to the above embodiment, and will not be described in detail here.

FIG. 22 illustrates a schematic structural diagram of a terminal device 2200 provided by an exemplary embodiment of the present disclosure, including at least one of a receiver 2210, a transmitter 2220, a processor 2230, a memory 2240, or a bus (not shown). The terminal device 2200 may be configured to perform some or all of the operations performed by the UE described above.

The receiver 2210 is configured to implement a receiving function, and the transmitter 2220 is configured to implement a sending function.

The transmitter 2220 is configured to send an uplink channel or an uplink signal based on a transmission parameter, the transmission parameter is determined based on a relevant parameter of a first frequency domain bandwidth.

Here, the first frequency domain bandwidth is a subset of the second frequency domain bandwidth. Here, the second frequency domain bandwidth is an available uplink bandwidth configured by the network device for the terminal device, and the first frequency domain bandwidth is an actual available uplink bandwidth determined in the second frequency domain bandwidth based on the configuration of the first duplex mode or the first time domain resource type. Exemplarily, the second frequency domain bandwidth is an uplink BWP of the terminal device. In some embodiments, the first frequency domain bandwidth is a proper subset of the second frequency domain bandwidth, that is, the first frequency domain bandwidth belongs to the second frequency domain bandwidth and is smaller than the second frequency domain bandwidth.

In some embodiments, the uplink BWP is an uplink BWP that is activated for uplink transmission of the terminal device. The first frequency domain bandwidth is all or part of the bandwidth of the uplink BWP. Since the available uplink subbands differ depending on different duplex modes or different time domain resource types, the first frequency domain bandwidth may change dynamically even for the same terminal device.

In some embodiments, the first frequency domain bandwidth may be understood as an available subband, an available uplink subband, an actual available subband, or an actual available uplink subband in an uplink BWP. In some embodiments, the transmission parameter of the uplink transmission includes at least one of a relevant parameter of the frequency hopping transmission or a relevant parameter of the uplink resource. The relevant parameter of the frequency hopping transmission includes at least one of: a size of a frequency hopping offset; a number of bits of first indication information for indicating the size of the frequency hopping offset; frequency domain resource allocation; a frequency domain starting position of each hop; a frequency domain starting position of a first hop; or a frequency domain starting position of a second hop.

In some embodiments, the apparatus further includes a processor 2230 for determining at least one of the above transmission parameters based on the relevant parameter of the first frequency domain bandwidth, and the determination mode may be referred to the previous relevant chapters, and will not be described again.

In some embodiments, the apparatus further includes a sending module configured to send at least one of: the first indication information, the second indication information, the configuration of the first time domain resource type, the configuration of the second time domain resource type, the configuration of the first frequency domain bandwidth, the configuration of the second frequency domain bandwidth, or the configuration of the third frequency domain bandwidth.

In some embodiments, the receiver 2210 and the transmitter 2220 may be implemented as a communication component, which may be a communication chip, which may be referred to as a transceiver. For example, the receiver 2210 and the transmitter 2220 are implemented as one wireless communication component. Optionally, the wireless communication component includes a wireless communication chip and/or a radio frequency antenna (not shown).

In some embodiments, the receiver 2210 is used to implement the functions and operations of the receiving module described above. In some embodiments, the transmitter 2220 may be used to implement the functions and operations of the sending module described above.

In some embodiments, the processor 2230 and the receiver 2210 may be implemented as one module, or the processor 2230 may be implemented as part of the receiver 2210.

The processor 2230 includes one or more processing cores, and executes various functional applications and information processing by running software programs and modules. In some embodiments, the processor 2230 may be used to implement the functions and operations of the processing module described above.

The memory 2240 may be used to store a computer program executed by the processor 2230 for executing the computer program to implement various operations in the method embodiments described above.

In some embodiments, the memory 2240 may be connected to the processor 2230, the receiver 2210, and transmitter 2220.

Further, the memory 2240 may be implemented by any type of volatile or nonvolatile storage device, including, but not limited to, magnetic or optical disks, an EEPROM, an EPROM, an SRAM, a ROM, a magnetic memory, a flash memory, a PROM, or a combination thereof.

In some embodiments, the receiver 2210 independently receives signals/data, or the processor 2230 controls the receiver 2210 to receive signals/data, or the processor 2230 requests the receiver 2210 to receive signals/data, or the processor 2230 cooperates with the receiver 2210 to receive signals/data.

In some embodiments, the transmitter 2220 sends signals/data independently, or the processor 2230 controls the transmitter 2220 to send signals/data, or the processor 2230 requests the transmitter 2220 to send signals/data, or the processor 2230 cooperates with the transmitter 2220 to send signals/data.

In some embodiments, the processor 2230 and the receiver 2210 may be implemented as one module, or the processor 2230 may be implemented as part of the receiver 2210. In some embodiments, the processor 2230 and the transmitter 2220 may be implemented as one module, or the processor 2230 may be implemented as part of the transmitter 2220.

For details not described in detail in this embodiment, refer to the above embodiment, and will not be described in detail here.

In an exemplary embodiment of the present disclosure, there is also provided a chip including a programmable logic circuit and/or program instructions for implementing the method for uplink transmission provided by each of the above-described method embodiments when the chip is run on a communication device.

In an exemplary embodiment of the present disclosure, there is also provided a computer-readable storage medium in which at least one program is stored, and the at least one program is loaded and executed by the processor to implement the method for uplink transmission provided by each of the above-described method embodiments.

In an exemplary embodiment of the present disclosure, there is also provided a computer program product that, when executed on a processor of a computer device, causes the computer device to execute the above-described method for uplink transmission.

In an exemplary embodiment of the present disclosure, there is also provided a computer program including computer instructions, and a processor of a computer device executes the computer instructions to cause the computer device to execute the method for uplink transmission described above.

The skilled person in the art can understand that all or part of the operations in the above-mentioned embodiments can be implemented by hardware, or by a program instructing related hardware. The program can be stored in a computer-readable storage medium, and the storage medium mentioned can be a read-only memory, a magnetic disk or an optical disk, etc.

## Claims

1. A method for uplink transmission, applied to a terminal device, the method comprising:
sending an uplink channel or an uplink signal based on a transmission parameter, the transmission parameter being determined based on a relevant parameter of a first frequency domain bandwidth,
wherein the first frequency domain bandwidth is a subset of a second frequency domain bandwidth, and the second frequency domain bandwidth is an uplink BandWidth Part (BWP).

2. The method of claim 1, wherein the relevant parameter of the first frequency domain bandwidth comprises at least one of:
a starting position of the first frequency domain bandwidth; or
a size of the first frequency domain bandwidth.

3. The method of claim 1 or 2, wherein the transmission parameter comprises at least one of:
a size of a frequency hopping offset;
a number of bits of first indication information for indicating the size of the frequency hopping offset;
a frequency domain resource allocation field;
a frequency domain starting position of each hop;
a frequency domain starting position of a first hop;
a frequency domain starting position of a second hop; or
an offset value parameter used to determine a resource set corresponding to the uplink channel.

4. The method of claim 3, wherein the size of the frequency hopping offset is determined based on at least one of:
one half of the first frequency domain bandwidth; or
one quarter of the first frequency domain bandwidth.

5. The method of claim 3, wherein the size of the frequency hopping offset is indicated by a codepoint carried by the first indication information; and
different codepoints correspond to different sizes of frequency hopping offsets.

6. The method of claim 5, wherein the number of bits of the first indication information is determined based on a size relationship between a size of the first frequency domain bandwidth and a first threshold.

7. The method of claim 6, further comprising:
in a case that the size of the first frequency domain bandwidth is smaller than the first threshold, the number of bits of the first indication information is a first number; and
in a case that the size of the first frequency domain bandwidth is greater than or equal to the first threshold, the number of bits of the first indication information is a second number.

8. The method of claim 3, wherein a processing mode of the frequency domain resource allocation field is determined based on a size relationship between a size of the first frequency domain bandwidth and a second threshold.

9. The method of claim 8, further comprising:
in a case that the size of the first frequency domain bandwidth is smaller than or equal to the second threshold, the frequency domain resource allocation field is processed in a first mode; and
in a case that the size of the first frequency domain bandwidth is greater than the second threshold, the frequency domain resource allocation field is processed in a second mode.

10. The method of claim 9, wherein at least one of the following applies:
the first mode comprises: truncating a bit sequence in the frequency domain resource allocation field based on the size of the first frequency domain bandwidth; or
the second mode comprises: extending the bit sequence in the frequency domain resource allocation field based on the size of the first frequency domain bandwidth.

11. The method of claim 3, wherein the frequency domain starting position of the second hop is determined according to at least one of:
the size of the frequency hopping offset;
a size of the first frequency domain bandwidth; or
second indication information for scheduling the uplink channel or the uplink signal.

12. The method of claim 11, wherein the second indication information comprises the first indication information, a codepoint carried by the first indication information indicates the size of the frequency hopping offset, and different codepoints correspond to different sizes of frequency hopping offsets; and
the number of bits of the first indication information is determined according to the size of the first frequency domain bandwidth or a size of the second frequency domain bandwidth.

13. The method of claim 3, wherein the frequency domain starting position of the each hop, the frequency domain starting position of the first hop, and the frequency domain starting position of the second hop are determined based on at least one of: the offset value parameter, a size of the first frequency domain bandwidth, or a starting position of the first frequency domain bandwidth.

14. The method of claim 3 or 13, wherein the offset value parameter is an offset of a frequency domain starting position of the resource set relative to a frequency domain starting position of the first frequency domain bandwidth.

15. The method of claim 13 or 14, wherein the offset value parameter is determined based on the size of the first frequency domain bandwidth.

16. The method of any one of claims 1 to 15, wherein a time domain resource corresponding to the uplink channel or the uplink signal is of a first time domain resource type.

17. The method of any one of claims 1 to 16, wherein the first frequency domain bandwidth comprises at least one of:
an uplink subband;
an intersection of the uplink subband and the uplink BWP;
an actual uplink subband, the actual uplink subband being the intersection of the uplink subband and the uplink BWP;
an actual uplink BWP, the actual uplink BWP being the intersection of the uplink subband and the uplink BWP;
an uplink subband part within the uplink BWP;
an available uplink subband part within the uplink BWP;
an uplink subband part within the uplink BWP of the first time domain resource type; or
an available uplink subband part within the uplink BWP of the first time domain resource type.

18. The method of any one of claims 1 to 17, wherein the uplink channel comprises at least one of: a Physical Uplink Shared Channel (PUSCH) or a Physical Uplink Control Channel (PUCCH).

19. The method of any one of claims 1 to 18, wherein the uplink signal comprises at least one of: a message 3 in a random access procedure, or a Hybrid Automatic Repeat Request-Acknowledgement (HARQ-ACK) of a message 4 in the random access procedure.

20. The method of any one of claims 1 to 19, wherein the transmission parameter is configured for a first time domain resource type and a second time domain resource type, respectively.

21. A method for uplink transmission, applied to a network device, the method comprising:
receiving an uplink channel or an uplink signal based on a transmission parameter, the transmission parameter being determined based on a relevant parameter of a first frequency domain bandwidth,
wherein the first frequency domain bandwidth is a subset of a second frequency domain bandwidth, and the second frequency domain bandwidth is an uplink BandWidth Part (BWP).

22. The method of claim 21, wherein the relevant parameter of the first frequency domain bandwidth comprises at least one of:
a starting position of the first frequency domain bandwidth; or
a size of the first frequency domain bandwidth.

23. The method of claim 21 or 22, wherein the transmission parameter comprises at least one of:
a size of a frequency hopping offset;
a number of bits of first indication information for indicating the size of the frequency hopping offset;
frequency domain resource allocation;
a frequency domain starting position of each hop;
a frequency domain starting position of a first hop;
a frequency domain starting position of a second hop; or
an offset value parameter used to determine a resource set corresponding to the uplink channel.

24. The method of claim 23, wherein the size of the frequency hopping offset is determined based on at least one of:
one half of the first frequency domain bandwidth; or
one quarter of the first frequency domain bandwidth.

25. The method of claim 23, wherein the size of the frequency hopping offset is indicated by a codepoint carried by the first indication information; and
different codepoints correspond to different sizes of frequency hopping offsets.

26. The method of claim 25, wherein the number of bits of the first indication information is determined based on a size relationship between a size of the first frequency domain bandwidth and a first threshold.

27. The method of claim 26, further comprising:
in a case that the size of the first frequency domain bandwidth is smaller than the first threshold, the number of bits of the first indication information is a first number; and
in a case that the size of the first frequency domain bandwidth is greater than or equal to the first threshold, the number of bits of the first indication information is a second number.

28. The method of claim 23, wherein a processing mode of the frequency domain resource allocation field is determined based on a size relationship between a size of the first frequency domain bandwidth and a second threshold.

29. The method of claim 28, further comprising:
in a case that the size of the first frequency domain bandwidth is smaller than or equal to the second threshold, the frequency domain resource allocation field is processed in a first mode; and
in a case that the size of the first frequency domain bandwidth is greater than the second threshold, the frequency domain resource allocation field is processed in a second mode.

30. The method of claim 29, wherein at least one of the following applies:
the first mode comprises: truncating a bit sequence in the frequency domain resource allocation field based on the size of the first frequency domain bandwidth; or
the second mode comprises: extending the bit sequence in the frequency domain resource allocation field based on the size of the first frequency domain bandwidth.

31. The method of claim 30, wherein the frequency domain starting position of the second hop is determined according to at least one of:
the size of the frequency hopping offset;
a size of the first frequency domain bandwidth; or
second indication information for scheduling the uplink channel or the uplink signal.

32. The method of claim 31, wherein the second indication information comprises the first indication information, a codepoint carried by the first indication information indicates the size of the frequency hopping offset, and different codepoints correspond to different sizes of frequency hopping offsets; and
the number of bits of the first indication information is determined according to the size of the first frequency domain bandwidth or a size of the second frequency domain bandwidth.

33. The method of claim 32, wherein the frequency domain starting position of the each hop, the frequency domain starting position of the first hop, and the frequency domain starting position of the second hop are determined based on at least one of: the offset value parameter, a size of the first frequency domain bandwidth, or a starting position of the first frequency domain bandwidth.

34. The method of claim 23 or 33, wherein the offset value parameter is an offset of a frequency domain starting position of the resource set relative to a frequency domain starting position of the first frequency domain bandwidth.

35. The method of claim 34, wherein the offset value parameter is determined based on the size of the first frequency domain bandwidth.

36. The method of any one of claims 21 to 35, wherein a time domain resource corresponding to the uplink channel or the uplink signal is of a first time domain resource type.

37. The method of any one of claims 21 to 36, wherein the first frequency domain bandwidth comprises at least one of:
an uplink subband;
an intersection of the uplink subband and the uplink BWP;
an actual uplink subband, the actual uplink subband being the intersection of the uplink subband and the uplink BWP;
an actual uplink BWP, the actual uplink BWP being the intersection of the uplink subband and the uplink BWP;
an uplink subband part within the uplink BWP;
an available uplink subband part within the uplink BWP;
an uplink subband part within the uplink BWP of the first time domain resource type; or
an available uplink subband part within the uplink BWP of the first time domain resource type.

38. The method of any one of claims 21 to 37, wherein the uplink channel comprises at least one of: a Physical Uplink Shared Channel (PUSCH) or a Physical Uplink Control Channel (PUCCH).

39. The method of any one of claims 21 to 38, wherein the uplink signal comprises at least one of: a message 3 in a random access procedure, or a Hybrid Automatic Repeat Request-Acknowledgement (HARQ-ACK) of a message 4 in the random access procedure.

40. The method of any one of claims 21 to 39, wherein the transmission parameter is configured for a first time domain resource type and a second time domain resource type, respectively.

41. An apparatus for uplink transmission, comprising:
a sending module, configured to send an uplink channel or an uplink signal based on a transmission parameter, the transmission parameter being determined based on a relevant parameter of a first frequency domain bandwidth,
wherein the first frequency domain bandwidth is a subset of a second frequency domain bandwidth, and the second frequency domain bandwidth is an uplink BandWidth Part (BWP).

42. An apparatus for uplink transmission, comprising:
a receiving module, configured to receive an uplink channel or an uplink signal based on a transmission parameter, the transmission parameter being determined based on a relevant parameter of a first frequency domain bandwidth,
wherein the first frequency domain bandwidth is a subset of a second frequency domain bandwidth, and the second frequency domain bandwidth is an uplink BandWidth Part (BWP).

43. A terminal device, comprising: a processor, a transmitter coupled to the processor, and a memory for storing executable instructions of the processor,
wherein the terminal device is configured to implement the method for uplink transmission of any one of claims 1 to 20.

44. A network device, comprising: a processor, a receiver coupled to the processor, and a memory for storing executable instructions of the processor,
wherein the network device is configured to implement the method for uplink transmission of any one of claims 21 to 40.

45. A computer-readable storage medium having stored thereon executable instructions being loaded and executed by a processor to implement the method for uplink transmission of any one of claims 1 to 20.

46. A chip comprising a programmable logic circuit or program for implementing the method for uplink transmission of any one of claims 21 to 40.

47. A computer program product comprising computer instructions stored in a computer-readable storage medium, a processor of a computer device reading the computer instructions from the computer-readable storage medium, and the processor executing the computer instructions, causing the computer device to perform the method for uplink transmission of any one of claims 1 to 40.

48. A computer program comprising computer instructions executed by a processor of a computer device to cause the computer device to perform the method for uplink transmission of any one of claims 1 to 40.
